# EUROPEAN PATENT APPLICATION

(11) **EP 2 990 565 A2**
(43) Date of publication of application: **02.03.2016**
(21) Application number: 15182315.0
(22) Date of filing: 25.08.2015
(51) Int. Cl.: E04H 9/14, E06B 9/00

(54) **FLOOD PROTECTION SYSTEM**

(30) Priority: 25.08.2014 DK 201470508
(71) Applicant: SabetoFLEX ApS, 7870 Roslev (DK)
(72) Inventor: Poulsen, Per, 7870 Roslev (DK)
(74) Representative: Tellefsen, Jens J.

(57) **Abstract**

Method of applying a domestic flood protection system said system comprising a profile system (20) and a membrane (21) where prior to flooding the profile system (20) is attached/arranged along the outside perimeter of the building (10) to be protected, where said profile system (20) comprises a rigid member (25) and where an adhesive (26) is provided on said rigid member (25), and when a flooding situation is expected/projected the membrane (21) is arranged along the building's perimeter extending upwards from the profile system (20) and overlapping said adhesive (26) on said profile system (20), thereby creating a watertight connection between the profile system (20) and the membrane (21).

## Description

### Field of the Invention

The present invention relates to a method of applying a domestic flood protection system as well as a domestic flood protection system as such.

### Background of the Invention

It has always been popular to live near the water, and this trend is increasingly spreading such that more and more dwellings are being built close to the sea. Over recent years the more severe weather conditions and unpredictable weather conditions have given rise to increasing flood problems where the sea has risen and flooded populated areas. Also increased rains in combination with the rivers being increasingly hampered in their ability to flood low lying farm areas have caused flooding in populated areas.

In addition to being dangerous and very inconvenient the flooding also causes destruction and loss of value, both to individuals, but also to whole societies. Although it would be sensible to avoid creating populated areas in flood prone areas, there is an increasing trend to build close to the sea. This, on the other hand, gives rise to various solutions on how to prevent domestic flooding.

### Object of the Invention

Whereas many prior art systems do not allow existing buildings to be flood protected or where the flood protected systems are in place all the time, the present invention addresses the flood protection problem by providing a system and a method of protection against floods which is easy to handle, easy to install and also easy to dismantle once the flood situation has passed.

### Description of the Invention

Therefore the present inventions provides a method for applying a domestic flood protection system said system comprising a profile system and a membrane where prior to flooding the profile system is attached/arranged along the outside perimeter of the building to be protected, where said profile system comprises a rigid member and where an adhesive is provided on said rigid member, and when a flooding situation is expected/projected the membrane is arranged along the building's perimeter extending upwards from the profile and overlapping said adhesive on said profile, thereby creating a watertight connection between the profile and the membrane.

Within the context of the present invention the term rigid profile shall be understood as a profile which will substantially maintain its shape during the loading which the flood protection system is exposed to. Rigid profiles may therefore in some embodiments also encompass relative flexible materials such as profiles made from plastics, GRC, and even membrane materials such as the material used for the flexible water-proof membrane with the present system. When such a membrane for example is fastened to a concrete slab or foundation or a bedrock, it will be strengthened by the surface to which it is fastened such that the connection between the watertight membrane and the profile will act as a rigid connection.

By attaching the profile system during good weather conditions the dwelling will become ready for the later installation of the membrane. Due to the fact that the profile system is arranged along the outside perimeter of the building and typically below the lowermost floor the profiles are inconspicuous, i.e. they do not appear to have influence on the exterior design of the building, but are ready when/if a flood situation should arise.

If there is a flood warning, it is relatively easy to install the membrane which typically will be delivered as a rolled up membrane such that by simply rolling the membrane along the perimeter of the house making sure that the lowermost edge of the membrane comes into contact with the previously installed profiles the protection system may very quickly be put in place. Where two membrane pieces overlap the membranes may be assembled by an adhesive or as in a further advantageous embodiment where the membrane contains butyl such that when overlapping the membrane with a similar membrane a self-adhesive effect is achieved.

In this connection a preferred membrane material is sold under the trade-name Wakaflex from the Monier group of companies. The Wakaflex is a rollable (i.e. being stored in roll form does not hamper its performance when it is unrolled and installed) laminate having a polyisobutylene surface where the rear side is provided with self-adhesive butyl strips. This material has the necessary strength to be rolled out and tightened along the building's perimeter, and at the same time due to the butyl strips it will adhere to the surface of the material such that self-adhesive connections are created without any third adhesive being necessary. At the same time it has very good water resistance and after the flood has ceased it is possible to roll the membrane back up just by cutting loose the places where the self-adhesive connections have been created during the installation.

In a still further advantageous embodiment the method provides a filler arranged in door recesses, window recesses and other recesses in order to provide a substantially flush building surface in the zone where the membrane is to be arranged. In this manner the load on the membrane from the water due to an apparent free space behind the membrane, i.e. behind the membrane and a window or door, is filled up with a filler for supporting the membrane such that when water pressure is applied to the membrane, it will not tear or deform in these positions. In this connection the term "substantially flush" shall be understood in the meaning that the recesses or cavities are filled to such a degree that although the membrane is flexible the flexibility of the membrane will not be stressed to such a degree that it will fail.

The invention is also directed at a domestic flood protection system wherein the profile system is inserted in the ground adjacent the building, such that at least the rigid member with the adhesive extends above the surface of the ground.

As the system has a very simple construction it is easy to handle even for private and unskilled persons. The profile system may be installed well ahead of time from when a potential flood is expected, and as such be a standard part of a dwelling in flood prone areas. The membrane material may be stored in a suitable place such as for example a basement or shed or the like and once a flood warning is issued, the flexible waterproof membrane material may be installed as described above. The means for fastening the profile system to the structure depends on what kind of structure and what part of the structure it is desirable to attach the profiles to. For surfaces made from wood, bricks or concrete the profiles may be attached directly to the surface, but for other surfaces special means may be provided.

Mechanical or adhesive fastening methods may be employed in order to install the profiles on/to a structure.

In some instances it may be advantageous to insert the profiles into the soil adjacent the building such that the profiles as such are not attached to the building, but extend below the ground surface adjacent the building, preferably down to a depth corresponding to the level of the ground water. In this manner a completely waterproof protection is provided such that even for longer periods of flooding the flood protection system according to the invention will protect the building.

Further advantages of the invention are disclosed in the dependent claims.

### Description of the Drawing

The invention will now be described with reference to the accompanying drawing wherein
- Figure 1: illustrates a building in the process of being fitted with the domestic flood protection system
- Figure 2: illustrates two details on how to fasten the membrane to the profile
- Figure 3: illustrates an alternative embodiment where the profile is at ground level or is the ground(bedrock)
- Figure 4: illustrates a further embodiment of the invention where the building to protect is built on pillars
- Figure 5: illustrates an embodiment of the invention where exterior fixtures are integrated in the flood protection system
- Figure 6: illustrates an embodiment of the invention for higher flood barriers
- Figure 7: illustrates a situation where a filler element is arranged in a door recess
- Figure 8: illustrates an embodiment of the invention where an access opening is fitted with a closure patch.
- Figure 9a-c: illustrate an embodiment where the membrane is permanently stored until use in a drainage ditch or designated storage ditch.

### Detailed Description of the Invention

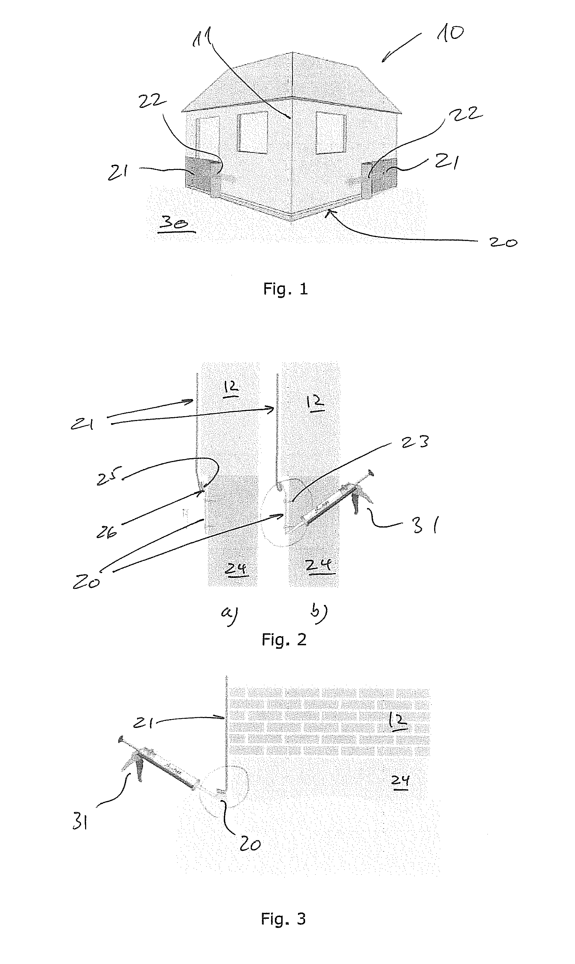

In figure 1 is illustrated a building, in this example a house 10, in the process of being fitted with the domestic flood protection system according to the present invention. The flood protection system comprises a profile 20 which is fitted along the periphery of the building 10 adjacent the ground 30. A waterproof flexible membrane 21 is illustrated as being unrolled in the direction of the arrows 22 such that when correctly fitted the waterproof membrane 21 will meet and be connected at the corner 11 of the house 10 and thereby complete the domestic flood protection.

In figure 2 are illustrated two details on how to fasten the membrane 21 to the profile 20. The profile 20 is in this embodiment fastened by means of screws or bolts 23 to the building's foundation 24. The profile illustrated in figure 2a) has along an upper edge a slight angle on which angle 25 and adhesive strip 26 is placed. The angled section of the profile 20 constitutes a rigid member. As the waterproof membrane 21 is installed as described above with reference to figure 1, the lower part of the membrane 21 will come into contact with the adhesive strip 26 on the profile, particularly on the angled part 25 and in this manner create a waterproof connection. When being handled or not in use, the adhesive strip 26 may be covered by a cover tape, in order to protect and preserve the adhesive properties of the adhesive strip 26.

In the embodiment illustrated in figure 2b) the profile system 20 is also mounted to the foundation by means of screws or bolts or rock anchors 23. The membrane 21 is in this embodiment folded around an upper part of the profile 20. The upper edge of the profile 20 is bent to such a degree that an up-side-down V-shape is formed, i.e. the free edge of the profile 20 is facing downwards. The membrane 21 is folded around the folded part of the profile 20 in such a manner that the adhesive connection between the waterproof member 21 and the profile is effected inside the V along the bent down part.

By bending the profile as illustrated the adhesive strip or means provided on the profile 20 is protected from the environment by the profile itself, i.e. by the bent portion. This is advantageous for profiles which are installed well before a flood occurs, in that the adhesive connection part is partly protected from the environment. With this type of profile as illustrated in figure 2b) it may be advantageous to install the membrane 21 by laying the membrane flat on the ground substantially perpendicular to the face of the building and fasten the bottom of the membrane as described above to the bent portion of the profile 20 and thereafter raise the membrane 21 up into vertical parallel to the wall 12 of the building.

In figure 3 is illustrated an alternative embodiment. In this embodiment it is not desirable to fasten the profile 20 to the building, i.e. neither the foundation 24 nor the wall 12. Consequently, the profile 20 is arranged on the ground having an adhesive surface facing upwards such that as the waterproof membrane 21 is installed, the lowermost portion of the membrane 21 is bent in order to create an adhesive connection with the profile 20.

Where the ground is suitable, for example when it is protruding rock, concrete slabs and the like, the membrane may be fastened directly to the ground - even without the use of profiles, in that the ground will act as profile. Preferably the membrane is positioned flat on the surface. In this manner a large contact surface is provided between membrane and the ground, and the water pressure, when a flood is present, will help press the membrane against the surface, thereby improving the water-tightness.

As illustrated both in figure 2 and in figure 3 an extra sealing mass may be installed by means of a caulking gun 31 between the profile 20 and the foundation 24 or the profile 20 positioned along the ground as illustrated in figure 3.

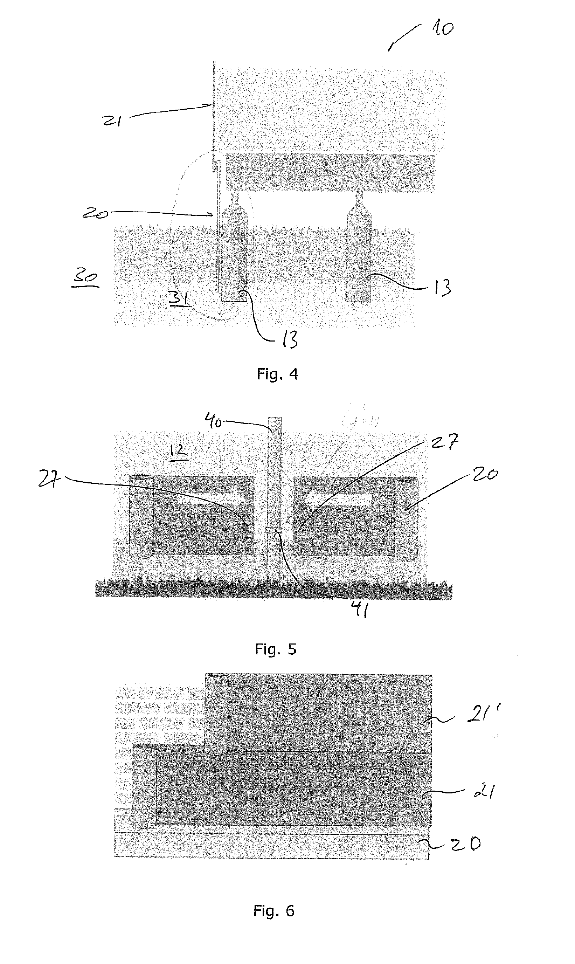

In figure 4 is illustrated a further embodiment of the invention where the house 10 is supported on pillars 13. In this particular embodiment the profiles 20 are in the shape of plates which plates 20 are inserted in the ground to such a level that the profile/plate 20 penetrates a waterproof layer 31 in the soil thereby making sure that water does not pass the flood barrier made from the waterproof membrane 21 and the plate 20.

Often with buildings there are exterior fixtures which also need to be included in the flood barrier. In the embodiment illustrated in figure 5 a rainwater downpipe 40 needs to be included in the membrane protection. In this instance the rainwater downpipe 40 is fastened to the wall 12 of the house by means of a bracket 41. In order to water-proof behind the bracket 41 slits 27 are provided in the end sections of the membranes 21 making it possible to slide the membrane behind the downpipe 40 over the bracket and create an overlap between the two membrane parts 21 such that a waterproof connection may be established behind the downpipe 40.

In some low-lying areas it might be necessary to create an especially high water-proof barrier and as illustrated in figure 6 due to the self-adhesive characteristics of the membrane material a second membrane 21' may be installed above the first membrane 21 with a little overlap in order to establish a water-proof self-adhesive connection between the two membranes 21, 21'. The first membrane 21 is fastened to the profile 20 in manner as already described above.

In this embodiment two rolls of membranes 21, 21' have been illustrated, but naturally more rolls of membranes above each other may be installed. Also, in some instances it is desirable to use membranes having a limited width in order to facilitate and ease the handling of the membranes and as such it may be necessary to arrange a number of rolls of membranes one above the other.

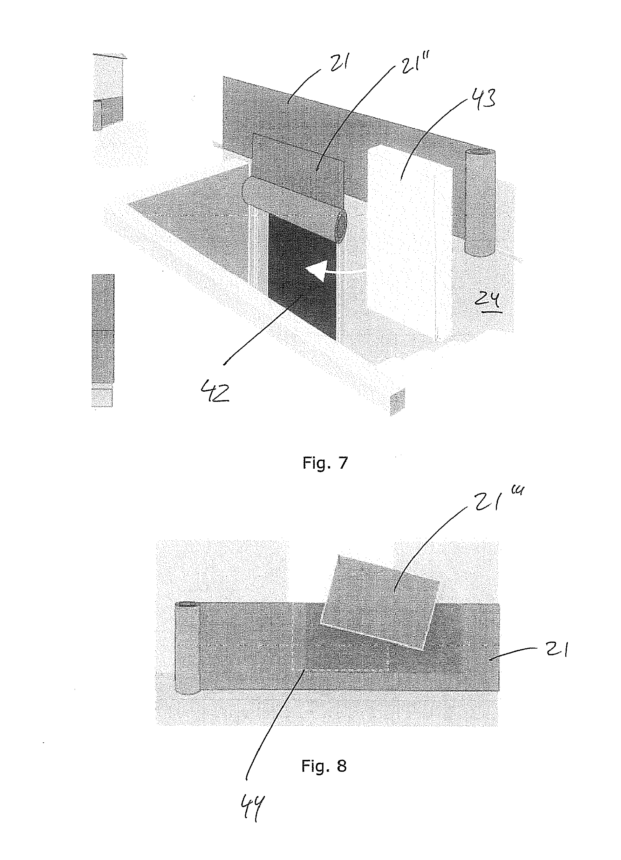

In figure 7 is illustrated a situation where a door recess 42 is arranged for example leading into a cellar. A door recess 42 will usually be out of the plane of the wall 12 or foundation wall 24, and for this purpose a filler element 43 is inserted into the door recess 42 in order to substantially bring the door recess into the same plane as the foundation wall 24. In this manner detrimental deformations of the membrane 21 and particularly the membrane part 21" adapted to water-proof the door opening is reduced or avoided altogether, and it is assured that the membrane is not deformed beyond its flexibility such that cracks or openings may arise as water pressure from the flood water urges the membrane 21" towards the filler element 43.

In other instances the flood protection system may be installed well ahead of time such that as illustrated with reference to figure 8 it will be necessary to cut openings and removing part of the membrane 21"' as illustrated in figure 8 where a cut has been performed along the dashed line 44. In this manner the flood protection system may be installed well ahead of time and still allow traffic in and out of the building. Naturally, before the flood is imminent the opening must be closed off with a membrane patch at least covering the opening in order to render the flood barrier effective.

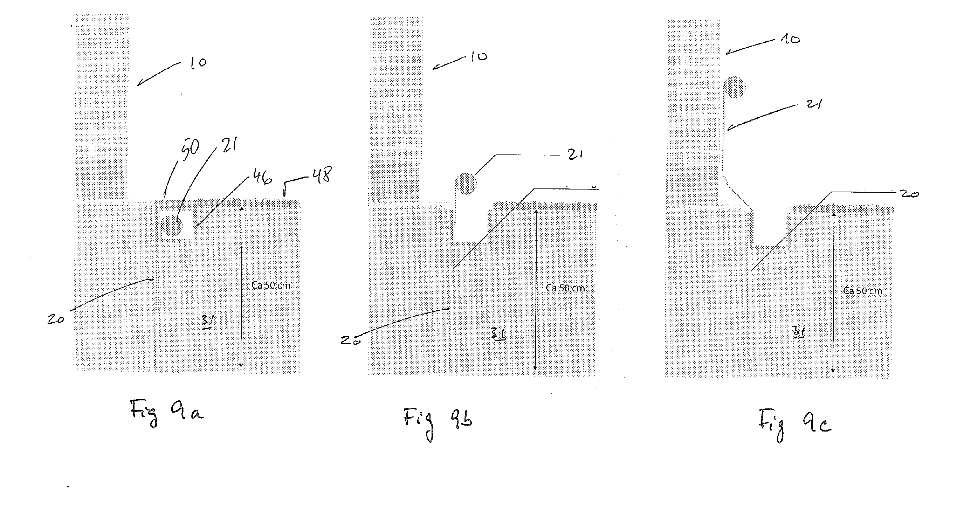

In figures 9A-9C a further embodiment of the invention is illustrated. In this invention a ditch, for example a drainage ditch 46 is arranged at least along a part of the periphery of a building 10. It is well-known to arrange these types of drainage ditches 46 along buildings where substantially flush with the surface of the surrounding area 48 a grate 50 is arranged allowing surface water to enter the drainage ditch 46 and be led off and disposed of in an appropriate manner. By selecting the dimensions of the drainage ditch 46 sufficiently large it is possible to store the water proof membrane 21 in the drainage ditch such that it is permanently attached to the side of the drainage ditch 46 which in this manner will represent the rigid profiles which otherwise has to be attached to the building's surface.

Furthermore, in order to ensure that flood water does not seep through the soil the rigid member may be provided with a plate member inserted a certain distance into the soil, for example 50 cm corresponding to the embodiment described with reference to figure 4.

Once it is desirable to install the flexible water tight membrane 21 the grate is removed and the roll of membrane 21 is lifted out of the ditch 46 as illustrated with reference to figure 9B. From this point it is easy to unroll the watertight membrane as illustrated with reference to figure 9C and install it on an outer surface of a building 10 as illustrated with reference to figure 9C

The present invention has now been described above with reference to particular embodiments of the invention, but it is clear that the invention limited by the claims may be carried out in various manners without departing from the scope of the appended claims.

## Claims

1. Method of applying a domestic flood protection system said system comprising a profile system (20) and a membrane (21) where prior to flooding the profile system (20) is attached/arranged along the outside perimeter of the building (10) to be protected, where said profile system (20) comprises a rigid member (25) and where an adhesive (26) is provided on said rigid member (25), and when a flooding situation is expected/projected the membrane (21) is arranged along the building's perimeter extending upwards from the profile system (20) and overlapping said adhesive (26) on said profile system (20), thereby creating a watertight connection between the profile system (20) and the membrane (21).

2. Method according to claim 1 wherein the profile system (20) is arranged as low as possible on the surface of the building (10) to be protected.

3. Method according to claim 1 or 2 wherein the membrane (21) contains butyl, such that when overlapping the membrane (21) with itself a self-adhesive effect is achieved.

4. Method according to any preceding claim wherein between the surface of the building (10) to be protected and the profile system (20), after having mounted the profile system (20), a flexible waterproof sealing material is arranged.

5. Method according to any preceding claim wherein a filler (43) is arranged in door recesses (42), window recesses and other recesses in order to provide a substantially flush building surface in the zone where the membrane (21) is to be arranged.

6. Method according to claim 1 wherein the profile system (20) is inserted in the ground adjacent the building (10), such that at least the rigid member (25) with the adhesive (26) extends above the surface of the ground.

7. Domestic flood protection system comprising:
a) a flexible waterproof membrane material (21);
b) a profile system (20), where said profile system (20) has an adhesive surface (26), which, when the profile system (20) is mounted in the use situation faces away from the structure (10) to be flood protected;
c) means for fastening said profile system (20) to or along the structure (10) to be flood protected.

8. Domestic flood protection system according to claim 7 wherein the adhesive surface (26) of the profile system (20) when not in use is covered by a removable cover tape.

9. Domestic flood protection system according to claim 7 or 8 wherein a filler (43) is arranged in door recesses (42), window recesses and other recesses in order to provide a substantially flush building surface in the zone where the membrane (21) is to be arranged, said filler (43) having a compression strength sufficient to withstand water pressure applied to the membrane (21).

10. Domestic flood protection system according to claim 9 where the filler (43) is selected from any of the following materials: expanded polystyrene plates, hard or semi-hard insulation, polyurethane foam boards, timber or plywood.

11. Domestic flood protection system according to claim 7, wherein the profile system (20) is made from a substantially corrosive resistant material selected from stainless steel, aluminum, plastic, reinforced and/or modified plastic, cement-based boards.
